# EUROPÄISCHE PATENTANMELDUNG

(11) **EP 0 866 346 A1**
(43) Veröffentlichungstag der Anmeldung: **23.09.1998**
(21) Anmeldenummer: 98101983.9
(22) Anmeldetag: 05.02.1998
(51) Int. Cl.: G01W 1/14, G08B 21/00

(54) **Schneealarmgeber**

(30) Priorität: 22.03.1997 DE 19712110
(71) Anmelder: Sauter Elektronik GmbH, 72469 Messstetten (DE)
(72) Erfinder: Sauter, Harry, 72469 Messstetten (DE)
(74) Vertreter: Patentanwälte Westphal, Buchner, Mussgnug Neunert, Göhring

(57) **Zusammenfassung**

Bei einem Schneealarmgeber mit einer Schneemengenerfassungseinrichtung (1), die einen Schneeauffangbehälter (12) aufweist und ein erstes Signal erzeugt, welches angibt, daß der Schneeauffangbehälter (12) wenigstens eine bestimmte Schneemenge enthält, einer Alarmgebereinrichtung (40), die bei Empfang des ersten Signals ein Alarmsignal ausgibt und einer Übertragungsstrecke für das erste Signal von der Schneemengenerfassungseinrichtung (1) zur Alarmgebereinrichtung (40) ist in der Übertragungsstrecke ein zeitgesteuerter Unterbrecher (26) vorgesehen, der die Übertragungsstrecke erst nach einem vorgegebenen Zeitpunkt schließt, um das erste Signal zur Alarmgebereinrichtung (40) durchzulassen. Auf diese Weise wird sichergestellt, daß eine durch das Alarmsignal zu weckende Person nicht früher als nötig geweckt wird.

## Beschreibung

Die vorliegende Erfindung betrifft einen Schneealarmgeber nach dem Oberbegriff des Anspruchs 1. Ein solcher Alarmgeber ist aus DE-A 3 344 088 bekannt:

Dieser bekannte Alarmgeber mißt die Menge des in einen Auffangbehälter gefallenen Schnees und löst ein Alarmsignal aus, wenn die Menge einen voreingestellten Wert überschreitet. Das Alarmsignal kann herangezogen werden, um automatisch Dachrinnenheizungen, automatische Streuanlagen etc. in Betrieb zu setzen. Allgemein wird dieser bekannte Alarmgeber empfohlen zur Verwendung durch Personen, die für die Schneeräumung verantwortlich sind. Zu diesem Personenkreis zählt ein Großteil der erwachsenen Bevölkerung, da fast jeder zumindest turnusmäßig für die Schneeräumung vor der eigenen Haustür verantwortlich ist. Für diesen Personenkreis hat die bekannte Vorrichtung aber einen entscheidenden Nachteil. Anders als bei bestimmten öffentlichen Flächen, die rund um die Uhr schneefrei gehalten werden sollen und für deren Räumung entsprechende Bereitschaftsdienste bestehen, müssen solche Flächen, für deren Freihaltung die Anwohner verantwortlich sind, nur zu bestimmten, durch kommunale Vorschriften festgelegte Tageszeiten, z. B. von 6 bis 21 Uhr geräumt sein. Diese Anwohner müssen bislang, um ihrer Räumpflicht zu genügen, bei Schneefallgefahr sehr früh aufstehen, um zu überprüfen, ob in der Nacht Schnee gefallen ist und ggf. rechtzeitig zu räumen. Liegt kein Schnee, so könnte man sich im Prinzip wieder hinlegen und weiterschlafen, doch gelingt dies nur wenigen. Viele Bürger stellen deshalb den Wecker nur dann früh genug zum Räumen, wenn sie so gut wie sicher sind, daß am nächsten Morgen Schnee liegen wird, und riskieren dabei, daß bei unerwartetem Schneefall Unfälle geschehen, für die sie später haftbar gemacht werden.

Der bekannte Schneealarmgeber bietet keinen Ausweg aus diesem Dilemma. Zwar würde er seine Benutzer zuverlässig vor nächtlichem Schneefall warnen, doch könnte er hierfür die Nachtruhe zu jedem beliebigen, noch so ungünstigen Zeitpunkt stören, was wiederum unerwünscht ist.

Aufgabe der vorliegenden Erfindung ist, einen Schneealarmgeber anzugeben, der die Nachtruhe seines Benutzers nicht mehr als unbedingt nötig stört und ihn dennoch von der Pflicht befreit, morgens vorbeugend früh aufzustehen, um zu überprüfen, ob Schnee geräumt werden muß.

Die Aufgabe wird gelöst durch einen Schneealarmgeber nach Anspruch 1. Die Erfassung der Schneemenge und die Erzeugung des ersten Signals in der Schneemengenerfassungseinrichtung können kontinuierlich oder zyklisch mit einer Periode von einigen Sekunden bis zu wenigen Minuten erfolgen. Der vorgegebene Zeitpunkt, zu dem der Unterbrecher die Übertragungsstrecke schließt, ist zweckmäßigerweise vom Benutzer in Abhängigkeit vom Beginn der Räumpflicht und der zum Räumen benötigten Zeit einstellbar.

Zweckmäßigerweise umfaßt die Übertragungsstrecke eine Funkübertragungsstrecke. Dadurch kann ein Benutzer die Schneemengenerfassungseinrichtung bequem an einem geeigneten Platz im Freien, z. B. in seinem Garten, und die Alarmgebereinrichtung getrennt davon, z. B. in seinem Schlafzimmer, aufstellen. Aus Gründen der Sicherheit und der einfachen Aufstellbarkeit sollte die Schneemengenerfassungseinrichtung durch Akkus oder Batterien mit Strom versorgt sein.

Als Meßgröße für die Schneemengenerfassung können das Gewicht des Schnees oder vorzugsweise die Schneehöhe im Auffangbehälter herangezogen werden. Die Schneehöhe wird bestimmt durch wenigstens einen, vorzugsweise mehrere optische Sensoren, die in verschiedenen Höhen an der Wand des Schneeauffangbehälters angeordnet sind. Jeder dieser Sensoren umfaßt einen Sender und einen Empfänger, vorzugsweise für Infrarotlicht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Figur 1: eine erfindungsgemäße Schneemengenerfassungseinrichtung im Halbschnitt,
- Figur 2: dieselbe Schneemengenerfassungseinrichtung in Draufsicht, teilweise im Schnitt,
- Figur 3: eine Alarmgebereinrichtung und
- Figur 4: eine zweite Ausgestaltung einer Schneemengenerfassungseinrichtung.

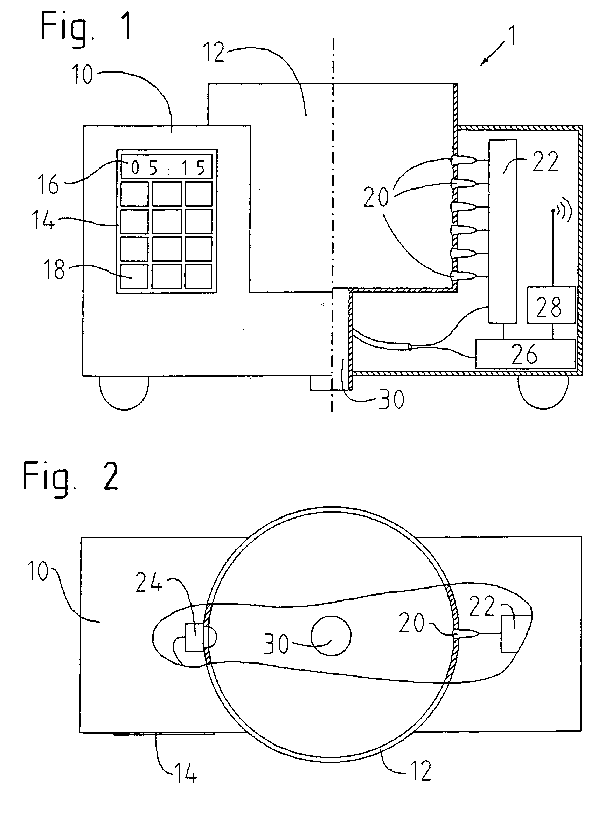

Die in Figur 1 gezeigte Schneemengenerfassungseinrichtung 1 umfaßt ein wasserdichtes Kunststoffgehäuse 10 mit einem eingelassenen Schneeauffangbehälter 12. Durch ein Ablaufrohr 30 am Boden des Auffangbehälters 12 kann Regen- oder Schmelzwasser abfließen. In der Wand des Schneeauffangbehälters 12 sind sechs Schneesensoren in unterschiedlichen Höhen angeordnet. Sie haben voneinander einen Abstand von ca. 2 cm, der unterste liegt ca. 2 cm über dem Boden des Schneeauffangbehälters 12.

Jeder Schneesensor umfaßt jeweils einen Infrarotsender 24 und einen Infrarotempfänger 20. Diese sind einander in gleicher Höhe gegenüberliegend an der Wand des Schneeauffangbehälters 12 angeordnet, wie im ausgeschnittenen Bereich der Fig. 2 gut zu erkennen ist.

Eine Steuer- und Auswerteeinheit 22 steuert zyklisch jeden der Infrarotsender 24 einzeln an, um ihn zum Leuchten anzuregen, und registriert gleichzeitig das vom auf gleicher Höhe gegenüberliegenden Empfänger 20 ausgegebene, der Intensität des empfangenen Lichts proportionale Signal. Überschreitet das vom Empfänger 20 ausgegebene Signal einen bestimmten Grenzwert, so ist dies ein Zeichen dafür, daß der Strahlengang zwischen Sender und Empfänger frei ist, der Schnee im Behälter 12, sofern vorhanden, die Höhe des betreffenden Sender-Empfänger-Paars noch nicht erreicht hat.

Auf der linken Seite des Gehäuses 10 ist ein Programmierfeld 14 mit einer Anzeige 16 und mehreren Tasten 18 angeordnet, mit deren Hilfe der Benutzer die Arbeitsweise des Schneealarmgebers wählen kann.

So kann er am Programmierfeld die Mindestschneemenge auswählen, die erreicht sein muß, damit der Schneealarmgeber anspricht. Hierzu hat er die Wahl zwischen einer Mehrzahl von diskreten Schneehöhen, die jeweils der Entfernung eines Sensors vom Boden des Auffangbehälters entsprechen. Ferner kann er auswählen zwischen einem Dauerbetriebszustand, in dem der Schneealarmgeber jederzeit bei Überschreiten der Mindestschneemenge anspricht, und einem Weckbetriebszustand, in dem der Alarmgeber nicht vor einem bestimmten Zeitpunkt anspricht, und er kann diesen Zeitpunkt auswählen. Der ausgewählte Zeitpunkt und/oder die ausgewählte Schneemenge werden auf der Anzeige 16 angezeigt.

Derartige Programmierfelder sind bekannt, so daß ihre technischen Einzelheiten hier nicht genauer beschrieben zu werden brauchen. Eine wasserdichte Folientastatur ist gut geeignet.

Ein Signal, das die am Programmierfeld 14 eingestellte Schneehöhe codiert, wird über eine Leitung an die Steuer- und Auswerteschaltung 22 weitergegeben.

Die Steuer- und Auswerteeinheit 22 ermittelt anhand der von den Infrarot-Empfängern 20 ausgegebenen Signale, ob die am Programmierfeld 14 eingestellte Schneehöhe erreicht oder überschritten ist. Hierfür kommen verschiedene Verfahren in Frage. Bei einem einfachen Verfahren wertet die Steuer- und Auswerteeinheit 22 lediglich das Ausgangssignal des der eingestellten Höhe entsprechenden Infrarotsensors 20 aus. Wenn das Signal den oben genannten Grenzwert nicht erreicht, folgert sie daraus, daß der Strahlengang durch das Infrarotlicht streuenden Schnee blockiert sein muß und erzeugt daraufhin ein erstes Signal, welches angibt, daß die eingestellte Schneehöhe erreicht oder überschritten ist.

Bei diesem Erfassungsverfahren können leicht Fehler auftreten, wenn der Schneefall zu stark ist, Fremdkörper wie etwa Laub in den Auffangbehälter 12 gefallen sind oder ein auf dem Infrarotsender 20 sitzender Regentropfen dessen Strahlung in unvorhergesehener Weise streut.

Deswegen ist die Auswerte- und Steuereinheit 22 vorzugsweise so konstruiert, daß sie das folgende Verfahren ausführt: Sie wertet zyklisch die Ausgangssignale von sämtlichen Infrarotempfängern 20 oder wenigstens die Ausgangssignale des der eingestellten Höhe entsprechenden Infrarotempfängers 20 und aller darunter liegenden Infrarotempfänger aus und erzeugt das erste Signal nur dann, wenn nicht nur das Ausgangssignal des der eingestellten Höhe entsprechenden, sondern auch das der darunterliegenden Empfänger 20 den Grenzwert nicht erreicht.

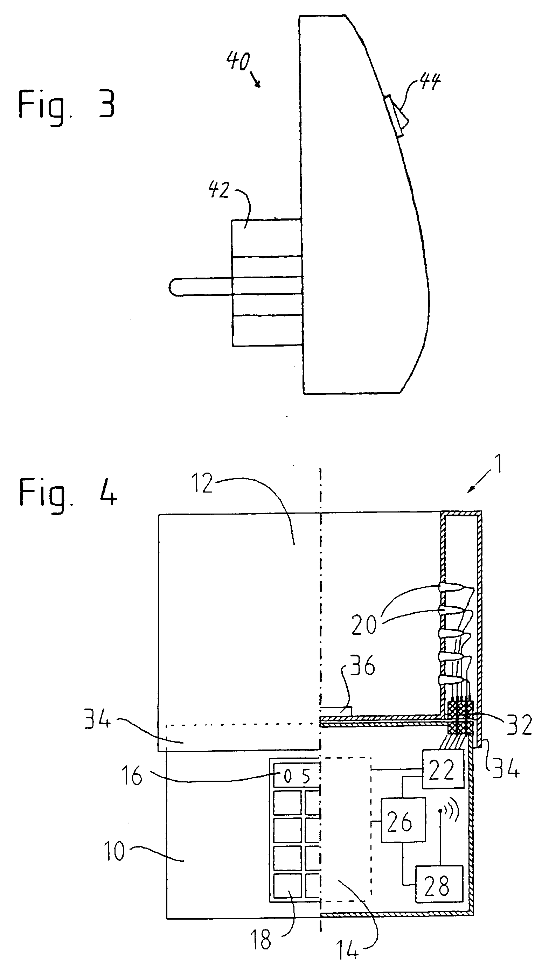

Das von der Auswerte- und Steuereinheit erzeugte erste Signal liegt an einem ersten Eingang eines Unterbrechers 26 an, der über einen zweiten Eingang mit dem Programmierfeld 14 verbunden ist und von dort ein Signal empfängt, das den ausgewählten Betriebszustand und ggf. den eingestellten Zeitpunkt codiert. Im Dauerbetriebszustand ist der Unterbrecher 26 geschlossen, so daß das erste Signal sofort zum Ausgang des Unterbrechers 26 und von dort zu einem Funksender 28 durchgelassen wird. Im Weckbetriebszustand ist der Unterbrecher 26 zunächst offen. Er vergleicht fortlaufend den eingestellten Zeitpunkt mit der tatsächlichen Uhrzeit und verbindet zum eingestellten Zeitpunkt seinen ersten Eingang mit dem Ausgang, so daß erst dann das erste Signal zu dem Funksender 28 durchgelassen wird, der es zu dem in Figur 3 gezeigten Alarmgeber überträgt. Nach Ablauf einer vorgegebenen Zeitspanne von z. B. einer Viertel- oder halben Stunde nach dem eingestellten Zeitpunkt öffnet der Unterbrecher 26 die Verbindung wieder.

Eine Reichweite des Funksenders 28 von 200 m ist für praktische Anwendungen ausreichend.

Der in Figur 3 in Seitenansicht gezeigte Alarmgeber 40 umfaßt in einem kompakten Kunststoffgehäuse einen Funkempfänger, der das vom Funksender 28 ausgestrahlte erste Signal empfängt und daraufhin einen Piezosummer aktiviert, der das Alarmsignal erzeugt, sowie einen Schalter 44 zum Ein-/Ausschalten der Stromversorgung von Empfänger und Summer. Der Summer ist hinter einem kleinen Fenster an der Vorderseite des Gehäuses angeordnet. In die Rückseite des Gehäuses ist ein Schukostecker 42 zum Einschieben in eine Steckdose integriert.

Wenn der Benutzer morgens von der Alarmgebereinrichtung 40 geweckt wird, legt er zunächst den Schalter 44 um, um das Alarmsignal auszuschalten. Später nimmt er im Freien die Schneemengenerfassungseinrichtung 10 auf und schüttet den Auffangbehälter 12 aus . Dadurch wird der Strahlengang zwischen den IR-Sendern 24 und -Empfängern 20 wieder frei, so daß das erste Signal nicht mehr erzeugt wird. Die Schneemengenerfassungseinrichtung kann dann ausgeschaltet und gelagert oder für den nächsten Einsatz wieder aufgestellt werden.

Um die Entleerung des Schneeauffangbehälters zu erleichtern, kann dieser von der Erfassungseinrichtung trennbar vorgesehen sein. Figur 4 zeigt eine Schneemengenerfassungseinrichtung, bei der dies der Fall ist. Die in die Wand des Auffangbehälters 12 eingelassenen IR-Sender und -Empfänger 24, 20 sind über Steckverbinder 32 mit der Steuer- und Auswerteeinheit 22 verbunden. Eine umlaufende Schürze 34 ist am unteren Rand des Auffangbehälters 12 vorgesehen, um die Steckverbinder 32 gegen das Eindringen von Nässe zu schützen. Regen oder Schmelzwasser kann durch einen Schlitz 36 in der Wand des Auffangbehälters ablaufen.

Zahlreiche Abwandlungen liegen im Rahmen der vorliegenden Erfindung. So kann der Alarmgeber kann anstelle des Summers oder zusätzlich dazu eine Signalleuchte umfassen, die dem Benutzer die Unterscheidung zwischen einem normalen Weckersignal und dem Alarmsignal erleichtert.

Ferner kann es für manche Benutzer von Interesse sein, die Schneemengenerfassungseinrichtung an unzugänglichen Stellen, z. B. auf dem Dach ihres Hauses aufzustellen, um zu verhindern, daß sie von Fremden beschädigt oder gestohlen werden. Insbesondere dann sind - für sich allein oder in Kombination miteinander - mehrere Abwandlungen zweckmäßig.

Zum einen kann anstelle von Akkus oder Batterien eine leitungsgebundene Stromversorgung vorgesehen werden.

Das Bedienfeld 14 und der Unterbrecher 28 werden zweckmäßigerweise an der Alarmgebereinrichtung 40 vorgesehen, damit der Benutzer nicht die Schneemengenerfassungseinrichtung aufsuchen muß, um Änderungen der Einstellungen vorzunehmen. Infolgedessen sind Funksender und -empfänger in der Übertragungsstrecke zwischen den IR-Empfängern und dem Unterbrecher angeordnet.

Um das Entleeren des Schneeauffangbehälters überflüssig zu machen, wäre zweckmäßigerweise eine Heizeinrichtung zum Abtauen des darin enthaltenen Schnees vorzusehen, die nach Auslösung des Alarmsignals oder nach Ausschalten des Schalters 44 durch den Benutzer für eine vorgegebene Zeitdauer automatisch aktiviert werden könnte.

### Bezugszeichenliste

Schneemengenerfassungseinrichtung 1
Gehäuse 10
Schneeauffangbehälter 12
Programmierfeld 14
Anzeige 16
Tasten 18
Infrarotempfänger 20
Steuer- und Auswerteschaltung 22
Infrarotsender 24
Unterbrecher 26
Funksender 28
Ablaufrohr 30
Steckverbinder 32
Schürze 34
Schlitz 36
Alarmgeber 40
Schukostecker 42
Ein-/Aus-Schalter 44

## Patentansprüche

1. Schneealarmgeber mit einer Schneemengenerfassungseinrichtung (1), die einen Schneeauffangbehälter (12) aufweist und ein erstes Signal erzeugt, welches angibt, daß der Schneeauffangbehälter (12) wenigstens eine bestimmte Schneemenge enthält, einer Alarmgebereinrichtung (40), die bei Empfang des ersten Signals ein Alarmsignal ausgibt und einer Übertragungsstrecke für das erste Signal von der Schneemengenerfassungseinrichtung (1) zur Alarmgebereinrichtung (40) dadurch gekennzeichnet, daß in der Übertragungsstrecke ein zeitgesteuerter Unterbrecher (26) vorgesehen ist, der die Übertragungsstrecke erst nach einem vorgegebenen Zeitpunkt schließt, um das erste Signal zur Alarmgebereinrichtung (40) durchzulassen.

2. Schneealarmgeber nach Anspruch 1, dadurch gekennzeichnet, daß die Übertragungsstrecke eine Funkübertragungsstrecke umfaßt.

3. Schneealarmgeber nach Anspruch 1 oder 2, gekennzeichnet durch eine Einrichtung (14, 18) zum Einstellen des vorgegebenen Zeitpunkts.

4. Schneealarmgeber nach einem der Ansprüche 1 bis 3, dadurch gekennzeichnet, daß die Schneemengenerfassungseinrichtung (1) zur Bestimmung der Schneemenge die Schneehöhe im Auffangbehälter erfaßt.

5. Schneealarmgeber nach Anspruch 4, dadurch gekennzeichnet, daß an der Wand des Schneeauffangbehälters (12) ein oder mehrere optische Sensoren (20, 24) angeordnet sind.

6. Schneealarmgeber nach Anspruch 5, dadurch gekennzeichnet, daß als optische Sensoren Infrarotsensoren (20, 24) vorgesehen sind.

7. Schneealarmgeber nach Anspruch 5 oder 6, dadurch gekennzeichnet, daß mehrere Sensoren (20, 24) in verschiedenen Höhen an der Wand des Schneeauffangbehälters (12) angeordnet sind.

8. Schneealarmgeber nach einem der Ansprüche 5 bis 7, dadurch gekennnzeichnet, daß jeder Sensor eine Lichtquelle (20) und einen Lichtempfänger (20) umfaßt.

9. Schneealarmgeber nach Anspruch 7 und Anspruch 8, dadurch gekennzeichnet, daß sich Lichtquelle (24) und Empfänger (20) eines Sensors in der Wand des Schneeauffangbehälters (12) diametral gegenüberliegen.

10. Schneealarmgeber nach einem oder mehreren der vorhergehenden Ansprüche, daduch gekennzeichnet, daß am Boden des Schneeauffangbehälters (12) ein Wasserablauf (30, 36) vorgesehen ist.

11. Schneealarmgeber nach Anspruch 10, dadurch gekennzeichnet, daß der Auffangbehälter (12) mit einer Heizeinrichtung zum Schmelzen des Schnees versehen ist.

12. Schneealarmgeber nach Anspruch 11, gekennzeichnet durch eine Steuereinrichtung, die Heizeinrichtung aktiviert, nachdem der Unterbrecher (26) das erste Signal durchgelassen hat.
